# EUROPÄISCHE PATENTANMELDUNG

(11) **EP 0 993 150 A2**
(43) Veröffentlichungstag der Anmeldung: **12.04.2000**
(21) Anmeldenummer: 99440236.0
(22) Anmeldetag: 27.08.1999
(51) Int. Cl.: H04L 12/28

(54) **Verfahren und Schaltvorrichtung zum datenverlustfreien Umschalten zwischen zwei Datenströmen**

(30) Priorität: 08.10.1998 DE 19846353
(71) Anmelder: ALCATEL, 75008 Paris (FR)
(72) Erfinder: Reemtsma, Jan-Hinnerk, Dr., 70825 Korntal-Münchingen (DE); Wilhelm, Michael, 71665 Vaihingen/Enz (DE); Herbrig, Holger, 70499 Stuttgart (DE)
(74) Vertreter: Brose, Gerhard, Dipl.-Ing.

(57) **Zusammenfassung**

Um möglichst störungsfrei, insbesondere ohne Datenverlust, zwischen zwei Datenströmen (d1, d2) gleichen oder ähnlichen Inhalts umschalten zu können, werden die beiden Datenströme miteinander auf Zeitversatz verglichen und wird dann, wenn ein Zeitversatz zwischen beiden Datenströmen (d1, d2) kompensiert ist, vom verglichenen ersten Datenstrom (d1) auf den verglichenen zweiten Datenstrom (d2) umgeschaltet. Die zugehörige Schaltvorrichtung umfaßt eine Vergleichseinrichtung zum Vergleichen der beiden Datenströme (d1, d2) auf Zeitversatz, eine Kompensationseinrichtung (4) zum Ausgleichen des Zeitversatzes und eine Schalteinrichtung (S) zum Umschalten vom verglichenen ersten Datenstrom (d1) auf den verglichenen zweiten Datenstrom (d2), wenn der Zeitversatz kompensiert ist.

## Beschreibung

Die Erfindung betrifft ein Verfahren und eine Schaltvorrichtung zum Umschalten von einem ersten Datenstrom auf einen dazu zeitlich versetzten zweiten Datenstrom gleichen oder ähnlichen Inhalts.

Moderne drahtlose Zugangssysteme benutzen Festnetze als Transportnetzwerke. In deren Koppelnetzen ergeben sich, insbesondere wenn auf der mobilen Seite beispielsweise Handover-Vorgänge zwischen zwei benachbarten Basisstationen stattgefunden haben, aufgrund unterschiedlicher Laufwege beträchtliche Laufzeitunterschiede der ankommenden Datenströme. Diese Laufzeitunterschiede von Datenströmen benachbarter Basisstationen können beim Umschalten zwischen zwei ansonsten störungsfreien Datenströmen, insbesondere bei "seamless Handover"-Prozeduren, zu Störungen, wie z.B. Datenverlusten oder - duplikationen, führen.

Aus der JP 08065282 A ist zum Umschalten von einem auf einen anderen Datenstrom das sog. "Hitless Switching" bekannt, bei dem der Zeitversatz zwischen den beiden Datenströmen mittels eines zu diesem Zweck erzeugten periodischen Taktsignals gemessen wird. Indem entsprechend diesem Zeitversatz Verzögerungen eingestellt werden, wird der zum Meßzeitpunkt vorhandene Zeitversatz für die Zukunft kompensiert und dann auf den neuen Datenstrom umgeschaltet. Sofern sich der Zeitversatz allerdings zwischenzeitlich geändert hat, d.h. zeitlich nicht konstant bleibt, können Störungen (Datenverlust oder -duplikationen) auftreten.

Der Erfindung liegt daher die Aufgabe zugrunde, ein Verfahren aufzuzeigen und eine Vorrichtung bereitzustellen, bei denen das Umschalten zwischen den beiden Datenströmen möglichst störungsfrei, insbesondere ohne Datenverlust, erfolgt.

Diese Aufgabe wird erfindungsgemäß durch ein Verfahren gelöst, bei dem die beiden Datenströme miteinander auf Zeitversatz verglichen werden und dann, wenn der Zeitversatz zwischen beiden Datenströmen kompensiert ist, vom verglichenen ersten Datenstrom auf den verglichenen zweiten Datenstrom umgeschaltet wird.

Das erfindungsgemäße Verfahren ermöglicht ohne Datenverlust eine "seamless handover"-Prozedur bei hohen Datenraten, unterstützt Makrodiversity und besitzt ein breites Anwendungsspektrum in Telekommunikation, Datenverarbeitung und Meßtechnik. Es arbeitet auch bei unkorreliert fehlerbehafteten Datenströmen und ist echtzeitfähig, so daß der Hardware-Aufwand für den Echtzeitvergleich von Datenströmen erheblich reduziert werden kann. Der Durchsatz erhöht sich und Datenverluste und -duplikationen werden vermieden.

Am einfachsten wird der Zeitversatz kompensiert, indem der dem anderen Datenstrom vorauseilende Datenstrom verzögert wird.

In bevorzugter Verfahrensausgestaltung werden die beiden Datenströme miteinander bitweise verglichen, um den Zeitversatz beider Datenströme in Einheiten von Bits zu bestimmen. Das erzielte Ergebnis wird dann dazu verwendet, die Datenströme so zu verzögern, daß der Zeitversatz zu Null wird. Der Vergleich der einzelnen Bits kann insbesondere an verschiedenen vordefinierbaren Stellen der beiden Datenströme stattfinden.

Die oben genannte Aufgabe wird bei einer Schaltvorrichtung der eingangs genannten Art gelöst durch eine Vergleichsschaltung zum Vergleichen der beiden Datenströme auf Zeitversatz, eine Kompensationseinrichtung zum Ausgleichen eines Zeitversatzes und eine Schalteinrichtung zum Umschalten vom verglichenen ersten Datenstrom auf den verglichenen zweiten Datenstrom, wenn der Zeitversatz kompensiert ist.

Mit dieser Schaltvorrichtung lassen sich die bereits oben hinsichtlich des Verfahrens genannten Vorteile erzielen.

Vorzugsweise weist die Schaltvorrichtung eine Steuereinrichtung auf, die die Kompensationseinrichtung entsprechend dem Zeitversatz ansteuert und die auch den Schaltvorgang auslösen kann, wenn der Zeitversatz kompensiert ist. Insbesondere sollte diese Steuereinrichtung auch den eher eintreffenden der beiden Datenströme bestimmen können, um diesen vorauseilenden Datenstrom durch die Kompensationseinrichtung (Verzögerungsglied) zu verzögern.

Da nur einer der beiden Datenströme kompensiert zu werden braucht, reicht im Prinzip ein einziges Verzögerungsglied aus, über das jeweils der zu kompensierende Datenstrom geleitet wird. Vorzugsweise ist jedoch für jeden Datenstrom jeweils ein Verzögerungsglied vorgesehen, das jeweils den relativen Zeitversatz zu Null bringt oder eine definierte Verzögerung der beiden Datenströme gegeneinander erlaubt.

Besonders bevorzugt sind Ausführungsformen der Erfindung, bei denen die Vergleichsschaltung n Register, in die jeweils der eine (erste) Datenstrom eingespeist wird, ein Register, in das der andere (zweite) Datenstrom eingespeist wird, sowie n Vergleicher, die die n Register, beginnend jeweils mit einem anderen Bit (z.B. jeweils mit derem n-ten Bit), bitweise mit dem einen Register vergleichen, und für jeden Vergleicher jeweils einen Zähler, der die Anzahl der übereinstimmenden Bits zählt, aufweist. Der Zähler mit dem der Länge des einen Registers entsprechenden, höchsten Zählerstand repräsentiert den Zeitversatz der beiden Datenströme. Eine Auswerteschaltung verarbeitet die unterschiedlichen Zählerstände zu Steuer- und Monitorsignale. Diese Registeranordnung setzt allerdings voraus, daß der zweite Datenstrom gegenüber dem ersten Datenstrom verzögert ist.

Um auch die Fälle erfassen zu können, bei denen der erste Datenstrom gegenüber dem zweiten verzögert ist, kann diese Vergleichsschaltung z.B. zusätzlich n Register, in die jeweils der zweite Datenstrom eingespeist wird, ein Register in das der erste Datenstrom eingespeist wird, sowie n Vergleicher, die die n Register, beginnend mit jeweils einem anderen Bit (z.B. mit jeweils derem n-ten Bit), bitweise mit dem einen Register vergleichen, und für jeden Vergleicher jeweils einen Zähler, der die Anzahl der übereinstimmenden Bits zählt, aufweisen. Eine solche Vergleichsschaltung kann unabhängig von der relativen zeitlichen Lage der beiden Datenströme arbeiten.

Um die Anzahl der Vergleicher und Zähler sowie die Komplexität der Vergleichsschaltung bei gleich großem zugelassenen Zeitversatz-Meßbereich möglichst klein zu halten, ist jedem der n Register jeweils ein Verzögerungsglied vorgeschaltet. Diese Verzögerungsglieder sind gemäß den Rahmenstrukturen (z.B. ATM-Zellen) der beiden Datenströme eingestellt bzw. programmierbar, um die Datenströme nur nutzlastblockweise zu vergleichen. Der Aufwand an Vergleichern und Zählern läßt sich so um den Faktor (Anzahl der Bits pro Rahmen - 1) reduzieren.

Besonders bevorzugt ist die Schaltvorrichtung als Server für eine digitale Telekommunikations(TK)-Vermittlungsstelle, z.B. für einen ATM-Schalter (Asynchronous Transfer Mode Switch) vorgesehen, wobei zum Umschalten auf den zweiten Datenstrom beide Datenströme in den Server umgeleitet und danach die Umleitung wieder aufgehoben wird. Durch dieses Serverprinzip ist die leichte Erweiterbarkeit bestehender Systeme sichergestellt.

Der Server läßt sich vorzugsweise an die Standardanschlüsse (Standardports) der TK-Vermittlungsstelle, insbesondere des ATM-Schalters, anschließen.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: schematisch ein Ausführungsbeispiel der erfindungsgemäßen Schaltvorrichtung im Ausgangszustand, in dem eine Datenverbindung von der einer (ersten) Basisstation zu einer Mobilstation besteht;
- Fig. 2: die erfindungsgemäße Schaltvorrichtung während einer Handover-Phase, in der eine andere parallele (zweite) Datenverbindung zwischen der Mobilstation und einer zweiten Basisstation zeitlich an die erste Datenverbindung angepaßt wird;
- Fig. 3: die erfindungsgemäße Schaltvorrichtung im Endzustand, nachdem auf die zweite Datenverbindung umgeschaltet worden ist;
- Fig. 4: schematisch ein erstes Ausführungsbeispiel einer Vergleichsschaltung zum Bestimmen des Zeitversatzes zwischen zwei Datenströmen; und
- Fig. 5: schematisch ein zweites Ausführungsbeispiel einer Vergleichsschaltung.

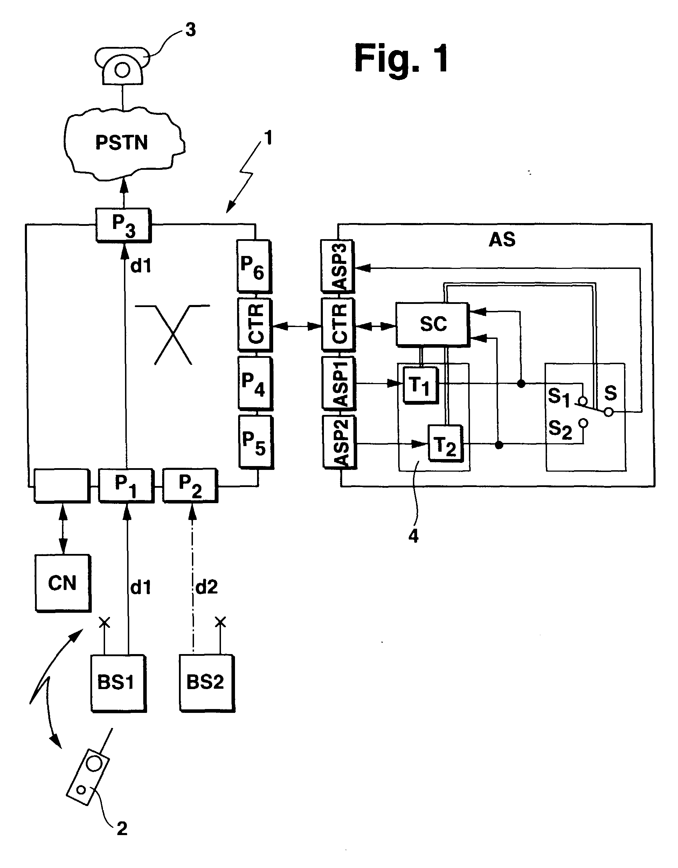

In Fig. 1 ist mit 1 eine digitale TK-Vermittlungsstelle (ATM-Schalter) bezeichnet, die jeweils unterschiedliche Datenverbindungen zwischen ihren Anschlüssen (Ports) P1 bis P6 herstellen kann. In Fig. 1 ist für eine Verbindung einer Mobilstation 2 eines Teilnehmers mit einem Endgerät 3 eines anderen Teilnehmers eine Datenverbindung von Port P1 zu Port P3 angenommen, wobei P1 mit der Basisstation BS1, in deren Funkzelle sich die Mobilstation 2 befindet, und P3 mit dem öffentlichen Telekommunikationsnetz PSTN (Public Switched Telecommunications Network), an das das Endgerät 3 angeschlossen ist, verbunden sind.

Wenn der mobile Teilnehmer von der Funkzelle mit der Basisstation BS1 in die Funkzelle mit der Basisstation BS2 wechselt, d.h., wenn ein Handover in einem mobilen Zugangsnetz ausgeführt wird, so existieren für eine Übergangszeit an der Vermittlungsstelle 1 zwei Datenströme gleichen Inhalts, nämlich der an P1 anliegende Datenstrom d1 und der von der Basisstation BS2 an P2 ankommende neue Datenstrom d2. Diese beiden Datenströme erreichen die Ports P1 und P2 auf unterschiedlichen Wegen und damit auch mit unterschiedlichen Laufzeiten.

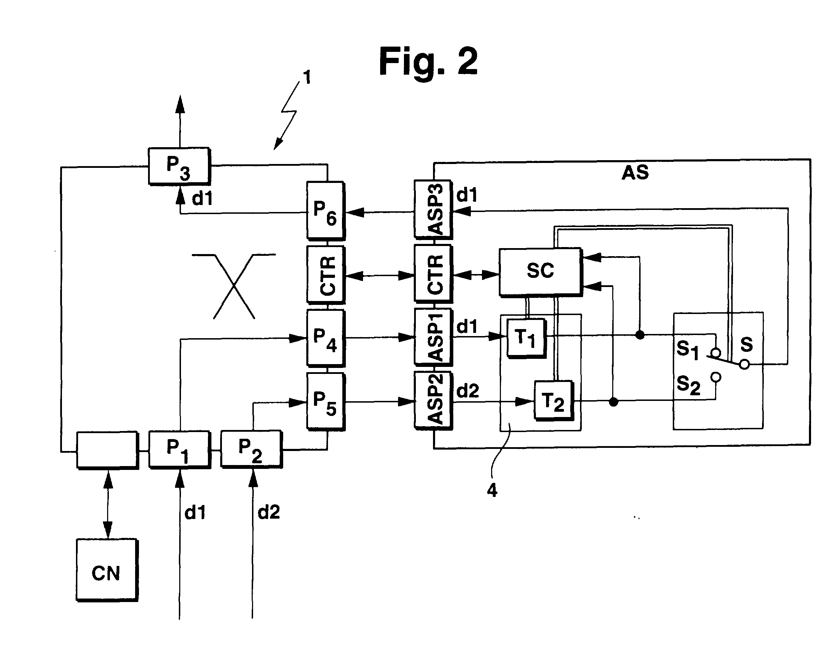

Im vorliegenden Fall wird die Leitungssteuerung CN (Control Node) der Vermittlungsstelle 1 davon unterrichtet, daß ein Handover stattfindet und davon die zwei Eingangsports P1, P2 und das Ausgangsport P3 betroffen sind. Als Folge davon werden die beiden Datenströme d1, d2 in eine Schaltvorrichtung in Form eines Servers AS (seamless handover Assistant Server) umgeleitet (Fig. 2) und zwar über Ports P4 und P5 in die Ports ASP1 bzw. ASP2 des Servers AS. Über einen in Ausgangsposition S1 befindlichen Schalter S wird der Datenstrom d1 im Server AS an das Port ASP3 und über Port P6 an das Ausgangsport P3 weitergeleitet. Gleichzeitig wird in der Vermittlungsstelle 1 die direkte Verbindung zwischen P1 und P3 abgebaut, wobei die Serversteuerung SC (Server Control) über die beiden CTR-Ports von Vermittlungsstelle 1 und Server AS mit den notwendigen Steuerinformationen versorgt wird.

Die Serversteuerung SC, die mit den beiden Datenströmen d1, d2 gespeist wird, ist mit einer Vergleichsschaltung versehen, die den Zeitversatz zwischen beiden Datenströmen d1 und d2 mißt. Entsprechend dem gemessenen Zeitversatz wird in den als voreilend erkannten Datenstrom ein Verzögerungsglied T1 bzw. T2 einer Kompensationseinrichtung 4 gesetzt, um den Zeitversatz zu kompensieren. Diese Kompensationseinrichtung 4 befindet sich noch vor dem Datenabgriff für die Serversteuerung SC. Wenn die Vergleichsschaltung keinen Zeitversatz mehr registriert, schaltet die Serversteuerung SC den Schalter S auf Position S2. Anstelle des verglichenen Datenstroms d1 wird nun der verglichene Datenstrom d2 an P3 geleitet, wodurch diese Umschaltung auf den Datenstrom d2 synchron zum Datenstrom d1 und damit datenverlustfrei erfolgt.

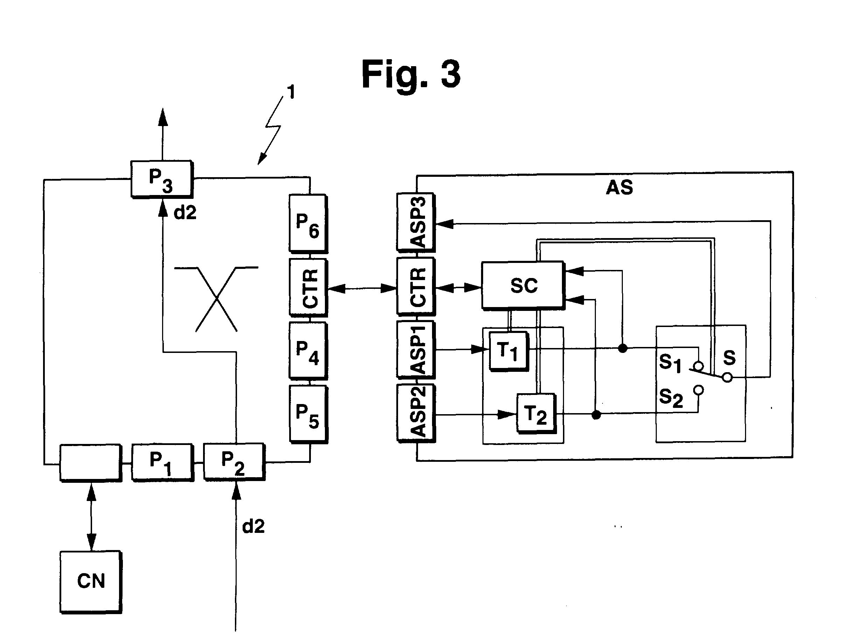

Als nächstes wird die zur Anpassung notwendige Verzögerung des jeweiligen Verzögerungsgliedes T1 bzw. T2 wieder aufgehoben. Die Serversteuerung SC meldet der Vermittlungsstelle 1, daß die Datenstromadaption erfolgreich zustande gekommen ist. Als Reaktion baut die Leitungssteuerung CN in der Vermittlungsstelle 1 eine direkte Verbindung zwischen Port P2 und Port P3 auf (Fig. 3) und löst gleichzeitig die Verbindungen über die Ports P4, P5 und P6 auf. Der Schalter S nimmt wieder seine Ausgangsstellung S1 ein.

Zur Behandlung von parallel stattfindenden Handover-Prozeduren bei verschiedenen Verbindungen ist es möglich, Multiplex-/De-Multiplexfunktionen der Ports auszunützen. Die Vergleichsschaltung in der Serversteuerung SC, die Kompensationseinrichtung 4 und der Schalter S sind dabei entsprechend zu vervielfachen.

Die Vergleichsschaltung als Teil der Serversteuerung SC kann z.B. aus zwei Registern der Länge N und einer kürzeren Länge (<N) bestehen, die jeweils mit den Datenströmen d1 und d2 gespeist werden. Indem der Inhalt jeder einzelnen Zelle des einen (kürzeren) Registers mit den N Zellen des anderen Registers verglichen wird, läßt sich der zeitliche Versatz des verglichenen Datenstroms d2 zum verglichenen Datenstrom d1 in Einheiten von Bits bestimmen. Wird die Vergleichsschaltung so ausgelegt, daß sie das Kreuzkorrelationsmaximum ermitteln kann, ist sogar der Vergleich unkorreliert fehlerbehafteter Datenströme möglich.

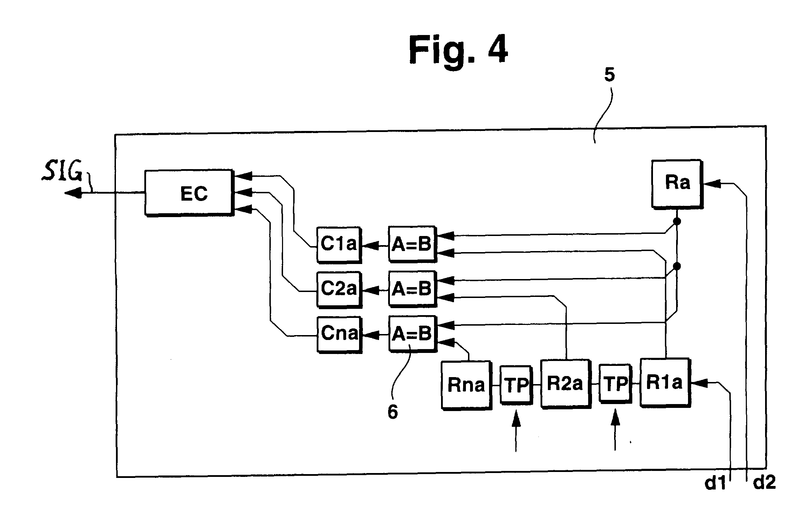

Ein Ausführungsbeispiel einer solchen Vergleichsschaltung 5, die einen bitweisen Vergleich von Datenströmen durchführt, ist in Fig. 4 gezeigt. Die zu vergleichenden Datenströme d1 und d2 werden in Register unterschiedlicher Länge eingespeist, nämlich der Datenstrom d1 in die Register R1a bis Rna und der Datenstrom d2 in das Register Ra. Den Registern R1a bis Rna ist jeweils ein Vergleicher 6 und ein Zähler C1a bis Cna zugeordnet, wobei die einzelnen Zählerstände von einer Auswerteschaltung EC (evaluation circuit) ausgewertet werden. In den Vergleichern 6 werden die n Register R1a bis Rna, z.B. beginnend mit jeweils ihrem n-ten Bit, bitweise mit dem Register Ra verglichen, wobei der zugehörige Zähler jeweils die Anzahl der übereinstimmenden Bits zählt, d.h., die Vergleicher 6 vergleichen, jeweils mit einem unterschiedlichen Bitversatz, die beiden Datenströme d1 und d2. Der Stand der einzelnen Zähler entspricht jeweils der Anzahl der positiven Übereinstimmungsvergleiche bei einem bestimmten Zeit- bzw. Bitversatz der beiden Datenströme.

Die Auswerteschaltung EC verarbeitet die unterschiedlichen Zählerstände zu Steuer- und Monitorsignalen SIG der Serversteuerung SC. Nach einer endlichen Meßzeit zeigt dann bei einem Datenversatz von z.B. einem Bit derjenige Zähler, der diesem Versatz zugeordnet ist, das höchste Ergebnis, hier im Beispiel also der Zähler C2a. Dieser Zähler repräsentiert damit den Zeitversatz der beiden Datenströme, ausgedrückt in Bits. Entsprechend dem gemessenen Zeitversatz werden die Datenströme d1, d2 mit Hilfe der oben beschriebenen Verzögerungsglieder T1, T2 verzögert, um den Zeitversatz auszugleichen bzw. um eine definierte Verzögerung der Datenströme gegeneinander zu erreichen. Die Anzahl n der Register R1a bis Rna muß größer als der zu messende Zeit- bzw. Bitversatz zwischen beiden Datenströmen sein.

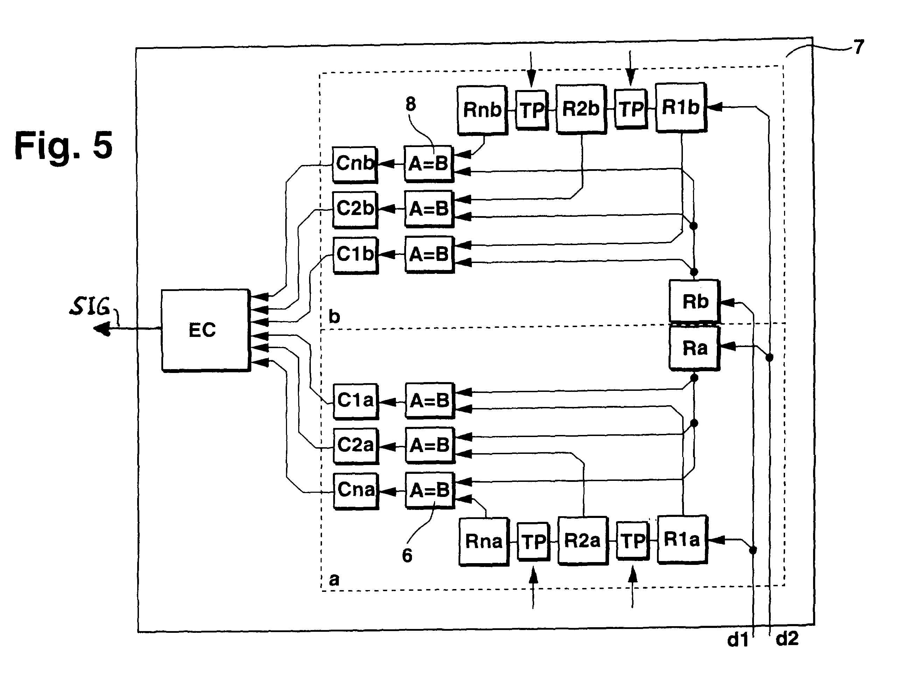

Das vorstehend beschriebene Beispiel erfährt eine Einschränkung derart, daß die so beschriebene Vergleichsschaltung 5 nur dann funktioniert, wenn der Datenstrom d2 gegenüber dem Datenstrom d1 verzögert ist. Um auch die Fälle erfassen zu können, bei denen umgekehrt der Datenstrom d1 gegenüber dem Datenstrom d2 verzögert ist, weist die in Fig. 5 gezeigte erweiterte Vergleichsschaltung 7 zusätzlich zu dem auch in Fig. 4 vorhandenen Vergleichszweig a einen weiteren Vergleichszweig b auf. Hier werden im Unterschied zum Vergleichszweig a der Datenstrom d2 in die n Register R1b bis Rnb und der Datenstrom d1 in das eine Register Rb eingespeist. Der Vergleich der beiden Datenströme erfolgt wie im Vergleichszweig a mit Vergleichern 8 und Zählern C1b bis C1b, deren Zählerstände in der gemeinsamen Auswerteschaltung EC ausgewertet werden. Dadurch arbeitet diese Vergleichsschaltung 7 unabhängig von der relativen Lage der beiden Datenströme d1 zu d2.

Um die Anzahl n der Vergleicher 6, 8 und Zähler Cna, Cnb sowie die Komplexität der Vergleichsschaltungen 5, 7 bei gleich großem zugelassenen Verzögerungsmeßbereich möglichst klein zu halten, befinden sich in den jeweiligen Registerzweigen a, b zusätzliche Verzögerungsglieder TP, die nicht an die Vergleicherkette angeschlossen sind. Diese Verzögerungsglieder TP sind programmierbar gemäß bekannter Rahmenstrukturen (z.B. ATM-Zellen) der Datenströme d1 und d2. Dies kann anhand von ATM-Zellen erläutert werden. Entweder das 1.Bit im Datenstrom d1 korrespondiert mit dem 1.Bit im Datenstrom d2, oder es korrespondiert erst wieder nach mindestens 48 x 8 Bits = 384 Bits (d.h. nach einem Nutzlastblock). Es würde daher wenig Sinn machen, in diesem Fall Bitversätze zwischen 2 und 383 Bits auszuwerten. Der Aufwand an Vergleichern und Zählern kann so um den Faktor (Anzahl Bits pro Rahmen - 1) reduziert werden.

Anstelle dieser programmierbaren Verzögerungsglieder TP kann auch ein einziger programmierbarer Zähler eingesetzt werden, der je nach Rahmenlänge die Einspeisung ins Register R1a und Ra bzw. R1b und Rb blockiert.

Das erfindungsgemäße Verfahren ist auch durchführbar, wenn beide Datenströme synchron zueinander sind. Außerdem ist die Erfindung auch auf das Umschalten zwischen mehr als zwei Datenströmen anwendbar.

## Patentansprüche

1. Verfahren zum Umschalten von einem ersten Datenstrom (d1) auf einen dazu zeitlich versetzten zweiten Datenstrom (d2) gleichen oder ähnlichen Inhalts,
**dadurch gekennzeichnet**,
daß die beiden Datenströme (d1, d2) miteinander auf Zeitversatz verglichen werden und
daß dann, wenn der Zeitversatz zwischen beiden Datenströmen (d1, d2) kompensiert ist, vom verglichenen ersten Datenstrom (d1) auf den verglichenen zweiten Datenstrom (d2) umgeschaltet wird.

2. Verfahren nach Anspruch 1, dadurch gekennzeichnet, daß der dem anderen Datenstrom vorauseilende Datenstrom verzögert wird.

3. Verfahren nach Anspruch 1 oder 2, dadurch gekennzeichnet, daß die beiden Datenströme (d1, d2) miteinander bitweise verglichen werden.

4. Verfahren nach Anspruch 3, dadurch gekennzeichnet, daß der Vergleich der einzelnen Bits an verschiedenen vordefinierbaren Stellen der beiden Datenströme (d1, d2) stattfindet.

5. Schaltvorrichtung zum Umschalten von einem ersten Datenstrom (d1) auf einen dazu zeitlich versetzten zweiten Datenstrom (d2) gleichen oder ähnlichen Inhalts, insbesondere zur Durchführung des Verfahrens nach einem der vorhergehenden Ansprüche,
**gekennzeichnet durch**
eine Vergleichsschaltung (5; 7) zum Vergleichen der beiden Datenströme (d1, d2) auf Zeitversatz, eine Kompensationseinrichtung (4) zum Ausgleichen eines Zeitversatzes und eine Schalteinrichtung (S) zum Umschalten vom verglichenen ersten Datenstrom (d1) auf den verglichenen zweiten Datenstrom (d2), wenn der Zeitversatz kompensiert ist.

6. Schaltvorrichtung nach Anspruch 5, gekennzeichnet durch eine Steuereinrichtung (Serversteuerung SC), die die Kompensationseinrichtung (4) entsprechend dem Zeitversatz ansteuert.

7. Schaltvorrichtung nach Anspruch 5 oder 6, dadurch gekennzeichnet, daß der dem anderen Datenstrom vorauseilende Datenstrom durch die Kompensationseinrichtung (4) verzögert ist.

8. Schaltvorrichtung nach einem der Ansprüche 5 bis 7, dadurch gekennzeichnet, daß die Kompensationseinrichtung (4) für jeden Datenstrom (d1, d2) jeweils mindestens ein Verzögerungsglied (T1, T2) aufweist.

9. Schaltvorrichtung nach einem der Ansprüche 5 bis 8, dadurch gekennzeichnet, daß die Vergleichsschaltung (5; 7) n Register (R1a,...,Rna), in die jeweils der eine (erste) Datenstrom (d1) eingespeist wird, ein Register (Ra), in das der andere (zweite) Datenstrom (d2) eingespeist wird, sowie n Vergleicher (6), die die n Register (R1a,...,Rna), beginnend mit jeweils einem anderen Bit, bitweise mit dem einen Register (Ra) vergleichen, und für jeden Vergleicher (6) jeweils einen Zähler (C1a,...,Cna), der die Anzahl der übereinstimmenden Bits zählt, aufweist.

10. Schaltvorrichtung nach Anspruch 9, dadurch gekennzeichnet, daß die Vergleichsschaltung (7) weiterhin n Register (R1b,...,Rnb), in die jeweils der zweite Datenstrom (d2) eingespeist wird, ein Register (Rb), in das der erste Datenstrom (d1) eingespeist wird, sowie n Vergleicher (8), die die n Register (R1b,...,Rnb), beginnend mit jeweils einem anderen Bit, bitweise mit dem einen Register (Rb) vergleichen, und für jeden Vergleicher (8) jeweils einen Zähler (C1b,...,Cnb), der die Anzahl der übereinstimmenden Bits zählt, aufweist.

11. Schaltvorrichtung nach Anspruch 9 oder 10, dadurch gekennzeichnet, daß jedem der n Register (R1a,...,Rna; R1b,...,Rnb) jeweils ein Verzögerungsglied (TP1,...,TPn) vorgeschaltet ist.

12. Schaltvorrichtung nach einem der Ansprüche 5 bis 11, dadurch gekennzeichnet, daß die Schaltvorrichtung als Server (AS) für eine digitale TK-Vermittlungsstelle (1) vorgesehen ist, wobei zum Umschalten auf den zweiten Datenstrom (d2) beide Datenströme (d1, d2) in den Server (AS) umgeleitet und danach die Umleitung wieder aufgehoben wird.

13. Schaltvorrichtung nach Anspruch 12, dadurch gekennzeichnet, daß der Server (AS) an die Standardports (P4-P6) der digitalen TK-Vermittlungsstelle (1), insbesondere des ATM-Schalters, angeschlossen ist.
